# EUROPEAN PATENT SPECIFICATION

(11) **EP 2 421 665 B1**
(45) Date of publication and mention of the grant of the patent: **08.10.2014**
(21) Application number: 10707563.2
(22) Date of filing: 12.02.2010
(51) Int. Cl.: B22C 7/02, B22C 9/10, B22D 29/00, B22C 1/00, B22F 3/04, B22F 3/15, B22F 5/10

(54) **METHOD FOR PRODUCING AN ARTICLE HAVING A CAVITY**
VERFAHREN ZUR HERSTELLUNG EINES ARTIKELS MIT EINEM HOHLRAUM
PROCÉDÉ POUR LA PRODUCTION D'UN ARTICLE AYANT UNE CAVITÉ

(30) Priority: 24.04.2009 FI 20095457
(43) Date of publication of application: 29.02.2012
(73) Proprietor: Wärtsilä Finland Oy, 65380 Vaasa (FI)
(72) Inventor: LAINE, Jarkko Ilari, FI-65100 Vaasa (FI)
(74) Representative: Berggren Oy Ab
(86) International application number: PCT/FI2010/050095
(87) International publication number: WO 2010/122213

(56) References cited:
- EP-A2- 0 210 027
- JP-A- 8 207 053
- US-A- 3 620 781

## Description

The present invention relates to a method for producing an article having a cavity. The invention also relates to a core suitable for use in casting process or isostatic pressing process.

Precision casting is commonly used to produce castings which have complex hollow interiors. Examples of such cast articles are valve seat inserts for the piston engine which are provided with an internal cooling channel. In order to produce a hollow interior in the cast article, the casting mould must be provided with the core, which is removed from the article after the solidification of the casting material. Especially in precision casting long holes or channels are difficult to make because the existing core materials are either giving poor surface quality or are difficult to remove from the solidified cast article. For example, the core may be removable with acids or other chemical solutions. This increases the costs of the process and chemical substances have their own disadvantages in storage, handling and disposal. Similar core problems exist with other casting methods and isostatic pressing processes.

The object of the present invention is to provide a solution by means of which the core can be easily removed from the article.

The objects of the invention are achieved as disclosed in claims 1, 6 and 7.

In the method according to the invention, a mould provided with a core is filled with article material and the material is hardened around the core to form the article. The core is made of yttria tetragonal zirconia polycristal materials (Y-TZP) or partially stabilized zirconium (PSZ). Additionally, after the hardening of the article partially stabilized zirconia (PSZ). Additionally, after the hardening of the article material the core is exposed to a steam atmosphere after which the core is removed from the article.

Considerable advantages can be achieved by means of the present invention. By subjecting the yttria-tetragonal zirconia polycrystal (Y-TZP) or partially stabilized zirconia material of the core to the steam atmosphere, the material degrades, after which the core can be easily removed from the solidified article. Therefore, no acids or other chemical substances are needed to remove the core from the article. In addition, the surface quality of the cavity interior is typically better than that of articles produced by the conventional methods. Further, the core material used in the invention is chemically inert and resistant to high temperatures.

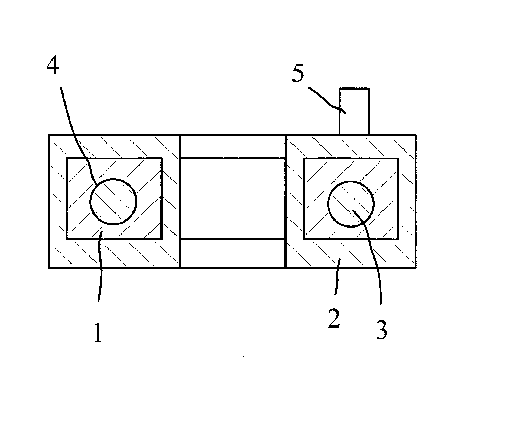

In the following, the invention is be described by way of an example with reference to the accompanying drawing, which is a cross-sectional view of a hollow valve seat insert in a mould.

The method according to the present invention is directed to method for producing an article 1 having a cavity 4. This kind of the article may be hollow or comprise a complex cavity configuration. The article 1 is produced in a mould 2 in which a core 3 is placed to form the cavity in the article 1. The mould 1 is filled with material of the article and the material is hardened at least partly around the core 3. Thereafter, the core is removed from the solidified article 1.

The article can be, for example, a cooled valve seat insert 1 which is attached to a cylinder head of an internal combustion engine. The valve seat insert 1 is annular and provided with a cavity i.e. an internal cooling channel 4 for coolant.

Additionally, the valve seat insert 1 comprises an inlet port for feeding cooling liquid into the cooling channel 4 and an outlet port for discharging cooling liquid from the cooling channel 4. The article 1 can be produced by casting or isostatic pressing. Suitable casting methods are precision casting, die casting, dead mould casting and sand casting. Correspondingly, suitable isostatic pressing methods are hot isostatic pressing and cold isostatic pressing.

The hollow shape or other complex shape of the article 1 is accomplished by a suitably shaped core 3. The core 3 is shaped to form an internal surface of the article 1. In the embodiment shown in the drawing the core 1 has a shape which corresponds to the shape of the cooling channel 4 in the finished valve seat ring 1.

The core 3 is composed of yttria-tetragonal zirconia polycrystal material(s) (ZrO₂-Y₂O₃), commonly known as Y-TZP. Y-TZP materials are used in structural applications because of unusual combination of high strength and toughness. Typically Y-TZP is used in dental applications. Another suitable core material is partially stabilized zirconia (ZrO₂-MgO), also known as PSZ. Both Y-TZP and PSZ are steam active materials i.e. their microstructures degrade in steam atmosphere. The core 3 can be manufactured by conventional methods suitable for ceramic materials. For example, the core 3 can be shaped as desired and thereafter sintered at an elevated temperature.

The article 1 can be made by precision casting. Precision casting methods are commonly used to produce articles having complex hollow interiors or other complex shapes. In precision casting process a pattern is formed about the core 3. The pattern is composed of wax, polystyrene or other pattern making material having a suitably low melting point. The core 3 is supported by pins made of suitable material. The pins are pushed through the pattern material until they engage the surface of the core 3. Thereafter, a ceramic mould 2 is built around the pattern assembly, i.e. pattern material, the core 3 and the pins. The mould 2 can be formed in a number of ways. Typically, the pattern assembly is repeatedly dipped in ceramic slurry to form the mould 2. After the mould 2 is built up on the pattern assembly, the pattern material is removed from the mould 2. Thereafter, the mould 2 is fired to increase its hardness. The space between the mould 2 and the core 3 is filled with a molten article material, for example metal material such as steel or iron. Molten material is poured into the mould 2 through an inlet channel 5. After hardening of the article material, the mould 2 is removed around the solidified article 1.

Thereafter, the core 3 is removed from the article 1 by exposing the core 3 to steam (water vapour) atmosphere i.e. steam treating the core 3. The core 3 is exposed to steam atmosphere at a temperature of at least 100°C, preferably at least 200°C. Typically, the temperature of the steam atmosphere is between 100 to 500°C, for example between 200 to 300°C. The core 3 is exposed to steam atmosphere for at least 1 hour, preferably for at least 3 hours. The duration of the steam treatment depends on multiple factors, for example the dimensions of the core 3 and the cast article 1 and the properties of the steam atmosphere. The steam treatment of the core 3 can be performed in an autoclave or a similar apparatus, which comprises a chamber for the article to be treated. During the steam treatment process saturated or superheated steam is fed into the chamber. Steam flushes the air out of the chamber. During the treatment steam destroys the core 3 microstructure i.e. degrades core material. After the steam treatment, the article is removed from the chamber. Finally, degraded core 3 is removed from the article 1.

The article 1 can be made by hot isostatic pressing. Hot isostatic pressing (HIP) process subjects the article 1 to both elevated temperature and isostatic pressure. In the HIP-process the core 3 is placed in the mould 2, and thereafter the mould 2 is filled with article material in powder form. Article material can be metal such as steel or iron. Then, the mould 2 is compressed under a uniform (isostatic) pressure at an elevated temperature. The pressure and temperature are such that the powder consolidates or hardens around the core 3. HIP-process as such is well known in the art and therefore is not described here in further detail than necessary to understand the invention. After the isostatic compression, the article 1 is removed from the mould 2. The core 3 is removed from the solidified article 1 by the same steam treating method as described above in connection with the precision casting process.

## Claims

1. A method for producing an article (1) having a cavity (4), in which method a mould (2) provided with a core (3) is filled with article material, the article material is hardened around the core (3) to form the article (1), and the core (3) is removed from the solidified article (1), **characterised in that** the core (3) is made of yttria tetragonal zirconia polycristal material (Y-TZP) or partially stabilized zirconia (PSZ), and after the hardening phase the core (3) is exposed to a steam atmosphere, after which the core (3) is removed from the article (1).

2. A method according to claim 1, **characterised in that** the core (3) is exposed to a steam atmosphere at a temperature of at least 100°C, preferably at least 200°C.

3. A method according to claim 1 or 2, **characterised in that** the core (3) is exposed to steam atmosphere for at least 1 hour, preferably for at least 3 hours.

4. A method according to claim 1, **characterised in that** the mould (2) is filled with molten metal material.

5. A method according to claim 1, **characterised in that** the mould (2) is filled with metal powder, which is hardened about the core (3) by isostatic pressing process.

6. Use of yttria tetragonal zirconia polycristal material (Y-TZP) or partially stabilized zirconia (PSZ) as a material for a core (3) used in casting or isostatic pressing process.

## Patentansprüche

1. Verfahren zur Herstellung eines Artikels (1) mit einem Hohlraum (4), wobei bei diesem Verfahren eine Form (2), die mit einem Kern (3) versehen ist, mit Artikelmaterial gefüllt wird, wobei das Artikelmaterial um den Kern (3) herum gehärtet wird, um den Artikel (1) zu formen, und der Kern (3) aus dem verfestigten Artikel (1) entfernt wird, **dadurch gekennzeichnet, dass** der Kern (3) aus Yttriumoxid-stabilisiertem tetragonalem polykristallinem Zirkonoxidmaterial (Y-TZP) oder teilstabilisiertem Zirkonoxid (PSZ) hergestellt wird und nach der Härtungsphase der Kern (3) einer Dampfatmosphäre ausgesetzt wird, wonach der Kern (3) aus dem Artikel (1) entfernt wird.

2. Verfahren nach Anspruch 1, **dadurch gekennzeichnet, dass** der Kern (3) bei einer Temperatur von mindestens 100 °C, vorzugsweise von mindestens 200 °C einer Dampfatmosphäre ausgesetzt wird.

3. Verfahren nach Anspruch 1 oder 2, **dadurch gekennzeichnet, dass** der Kern (3) mindestens 1 Stunde, vorzugsweise mindestens 3 Stunden einer Dampfatmosphäre ausgesetzt wird.

4. Verfahren nach Anspruch 1, **dadurch gekennzeichnet, dass** die Form (2) mit geschmolzenem Metallmaterial gefüllt wird.

5. Verfahren nach Anspruch 1, **dadurch gekennzeichnet, dass** die Form (2) mit Metallpulver gefüllt wird, welches durch einen isostatischen Pressvorgang um den Kern (3) herum gehärtet wird.

6. Verwendung von Yttriumoxid-stabilisiertem tetragonalem polykristallinem Zirkonoxidmaterial (Y-TZP) oder teilstabilisiertem Zirkonoxid (PSZ) als ein Material für einen Kern (3), der beim Gießen oder bei einem isostatischen Pressvorgang verwendet wird.

## Revendications

1. Procédé pour la production d'un article (1) ayant une cavité (4), dans lequel procédé un moule (2) pourvu d'un noyau (3) est rempli d'un matériau d'article, le matériau d'article est durci autour du noyau (3) pour former l'article (1) et le noyau (3) est retiré de l'article solidifié (1), **caractérisé en ce que** le noyau (3) est fait de matériau polycristallin à la zircone tétragonale à l'yttrium (Y-TZP) ou de zircone partiellement stabilisée (PSZ) et que, après la phase de durcissement, le noyau (3) est exposé à une atmosphère de vapeur, après quoi le noyau (3) est retiré de l'article (1)

2. Procédé selon la revendication 1, **caractérisé en ce que** le noyau (3) est exposé à une atmosphère de vapeur à une température d'au moins 100° C, de préférence au moins 200° C.

3. Procédé selon la revendication 1 ou 2, **caractérisé en ce que** le noyau (3) est exposé à une atmosphère de vapeur pendant au moins 1 heure, de préférence pendant au moins 3 heures.

4. Procédé selon la revendication 1, **caractérisé en ce que** le moule (2) est rempli de matériau métallique en fusion.

5. Procédé selon la revendication 1, **caractérisé en ce que** le moule (2) est rempli de poudre métallique qui est durcie autour du noyau (3) par procédé de compression isostatique.

6. Utilisation de matériau polycristallin à la zircone tétragonale à l'yttrium (Y-TZP) ou de zircone partiellement stabilisée (PSZ) en tant que matériau destiné à un noyau (3) utilisé dans un procédé de fonderie ou de compression isostatique.
